# EUROPEAN PATENT SPECIFICATION

(11) **EP 1 468 026 B1**
(45) Date of publication and mention of the grant of the patent: **13.06.2007**
(21) Application number: 03704467.4
(22) Date of filing: 24.01.2003
(51) Int. Cl.: C08F 6/04, C08G 85/00

(54) **PROCESS AND APPARATUS FOR THE TECHNICAL FRACTIONATION OF OLIGOMERS AND POLYMERS**
VERFAHREN UND VORRICHTUNG ZUR TECHNISCHEN FRAKTIONIERUNG VON OLIGOMEREN UND POLYMEREN
PROCEDE ET APPAREIL DE FRACTIONNEMENT TECHNIQUE D'OLIGOMERES ET DE POLYMERES

(30) Priority: 24.01.2002 DE 10202591
(43) Date of publication of application: 20.10.2004
(73) Proprietor: Wolf, Bernhard Anton, 55127 Mainz (DE)
(72) Inventor: WOLF, Bernhard, Anton, 55127 Mainz (DE); ECKELT, John, 55130 Mainz (DE); EICH, Tanja, 55124 Mainz (DE); LOSKE, Stefan, 12031-740 Taubaté-SP (BR)
(74) Representative: HOFFMANN EITLE
(86) International application number: PCT/EP2003/000755
(87) International publication number: WO 2003/062282

(56) References cited:
- EP-A- 0 448 082
- EP-A- 0 499 267
- US-A- 4 423 207
- US-A- 5 684 125

## Description

The invention relates to a process for the technical fractionation of polymers using spinning nozzles and combinations of solvent and precipitation agent as well as apparatuses for carrying out this process.

The fractionation of polymers primarily from highly diluted solutions has already been described adequately in the literature. Herein, a separation is achieved with the aid of phase equilibria, according to the molecular weight and/or the chemical composition of the polymers. Often good separation results can be achieved by repeating the fractionation several times and by appropriate recombination of the intermediate fractions. An economical use of this process is, however, made difficult by the very high working time and amount of solvents required in the case of fractionated amounts that clearly exceed gram-scale.

A process that makes larger amounts of substances available has already been disclosed in the literature (Wolf, B.A. "Continuous Polymer Fractionation" in Encyclopedia of Advanced Materials; Bloor, D.; Brook, R.J.; Flemings, M.C.; Mahajan, S., Eds.; Pergamon Press: Oxford, New York, Seoul, Tokyo, 1994; pp 881-885). This known process makes advantageously use of the effect that it is possible to produce products with a small degree of non-uniformity from samples having a large degree of molecular and/or chemical non-uniformity by means of a continuous countercurrent extraction. This is done by dissolving the polymers in a suitable one- or multicomponent solvent and using this mixture as the delivering-phase.

In the case of relatively low molecular polymers, the possibility of fractionation by means of a flow-through-centrifuge was described (Cook, M. M.; Rahman, M. D.; Wanat, S.F.; McKenzie, D.; Narasimhan, B.; Fea, R.; Munoz, M. SPIE Proc. 1999, 3678, 1175-1184).

It is to be considered as disadvantageous in the known processes that they can only be applied successfully in case of low polymer concentrations. In all other cases described so far, the fraction of the polymer in the entire mixture to be used for the fractionation remains far below the critical concentration, which in the case of high molecular compounds, ranges typically from 5 to 15 weight percent, depending on their molecular weight. This restriction is particularly disadvantageous in the case of biopolymers and their derivatives.

The described circumstances imply the use of uneconomically large amounts of solvents for the fractionation of polymers on a technical scale. The reasons for the restriction of the known processes to diluted solutions lie in the viscosity, which must be maintained so low for the fractionation that an exchange of compounds between the coexisting phases can proceed at a sufficient rate. With an increasing content of polymers and a viscosity that increases typically more than exponentially, the efficiency of the fractionation is lowered drastically. Besides, this has the effect that the highly viscose polymer-rich phase, that is formed during the fractionation, often clogs the used apparatus (damming back). The above-mentioned processes for fractionation are therefore unsuitable or at least uneconomical for various technical applications.

The invention is therefore based on the problem of providing a process as well as an apparatus for the technical fractionation of polymers, which allow to realize high polymer concentrations at the working point (composition of the entire content of the apparatus for fractionation to be used under steady state conditions) and which therefore permit to separate macromolecules under economical conditions according to various criteria, in particular according to the molecular weight, chemical composition of copolymers or molecular architecture in the case of non-linear products, in technically relevant amounts.

It was found that this problem can be solved unexpectedly by means of using spinning nozzles through which the polymer solution to be fractionated is pressed into a precipitation liquid, as well as by an accordingly designed apparatus.

An object of the invention is a process for the fractionation of polymers, characterized in that the polymer solution (delivering-phase) is pressed through a spinning nozzle or through several spinning nozzles, e.g. 2 to 5 spinning nozzles, into a mixing zone containing an intensively agitated precipitation liquid (receiving-phase), wherein a two-phase mixture of a sol-phase and a gel-phase is formed and wherein the sol-phase and the gel-phase are separated from each other.

It is possible by means of the process according to the invention to design a fractionation of polymers (and oligomers) in such a way that a large amount of the solvents and precipitation agents, that are otherwise needed for the fractionation, can be saved. By using spinning nozzles it is possible to press a concentrated polymer solution, suitably with the aid of a pump, into a violently agitated, e.g. stirred, precipitation liquid. In this way, very thin threads of the starting solution are formed, which fall into a row of minute drops with a high ratio of surface to volume, shortly after their discharge from the spinning nozzle. Due to their large surface and because of the small transportation distances, the polymers of high solubility from this delivering-phase are selectively transferred to the receiving-phase despite their high viscosities. In this way, a higher concentrated gel-phase, in which the less soluble components are enriched, is formed from the starting polymers, as well as a less concentrated sol-phase, containing components having a better solubility. The technically feasible upper limit of the polymer concentration in the starting solution depends solely on the flowability of the solutions, because these normally need to be pumped.

Contrary to the Continuous Polymer Fractionation (CPF) it is possible to carry out the fractionation with a very good fractionation result also under supercritical conditions (the differences between the coexisting phases disappear at the critical point). The supercritical fractionation offers great advantages in various respects. On the one hand, the reduction of the amount of solvent reduces the costs and protects the environment and, on the other hand, it is possible to increase the turnover of polymer per time unit significantly.

The process according to the invention and the apparatus according to the invention as described below are suitable for the technical fractionation of homopolymers with varying molecular architecture, e.g. linear, cyclic, star-shaped, brush-shaped, branched, hyperbranched, or crosslinked structure, according to the molecular weight, as well as for the technical fractionation of copolymers with varying molecular structure according their chemical composition.

A concentrated homogenous solution of the starting mixture of polymers is suitably pressed through one, two or several spinning nozzles into a violently stirred, thermodynamically inferior solvent consisting of one or more components, which is selected such that it can receive preferably the components of the polymer to be fractionated that are better soluble.

The receiving phase may also contain another polymer (auxiliary polymer), e.g. a homopolymer of type A in case where a copolymer of type AB is to be fractionated.

The restrictions of the known processes with respect to the polymer content of the starting solution are not applicable in this case because the viscosity of the delivering-phase loses its limiting roll for the transfer of the better soluble components into the receiving phase, as a result of its high degree of dispersion. In addition, the special design of the experiment permits to avoid a tailback of the delivering-phase which can often not be prevented in a continuous countercurrent extraction.

In the case of a separation according to the molecular weight, the high molecular components at a given molecular architecture are collected in the polymer-rich phase. In the case of a fractionation according to the chemical composition, the polymer-rich phase contains preferably those macromolecules comprising a larger amount of the type of monomer which reduces the solubility.

If the polymer molecules of a starting sample are distinguished not only by means of their molecular weight, but also by means of their geometric structure and/or their chemical composition, it is necessary to select the solvents according to the specific objective. It is possible to control whether the fractionation takes place preferably according to the molecular mass or according to the chemical composition by means of a suitable choice of the precipitation liquid. For the separation of a highly branched copolymers having a large fraction of comonomers of a type A, it is necessary that the solubility of the individual components of the starting polymers having an increasing degree of branching and an increasing content of A change significantly and in the same direction. If the solubility increases, these components are enriched in the phase that is low in polymers, and if it decreases, they remain in the polymer-rich phase. Suitable solvents and solvent mixtures can be determined by means of known procedures, preferably by means of cloudiness titration and/or analysis of the phases coexisting in the equilibrium.

The fractionation is preferably carried out continuously, wherein the working points are realized by means of the flows of the solution of the starting polymers and of the polymer-free solvent (-mixture).

All soluble polymers can be fractionated by means of the process according to the invention, for which it is possible to realize a liquid/liquid segregation. Examples of such polymers that can be advantageously fractionated by means of the process according to the invention are:
Cellulose and cellulose derivatives, as for example cellulose acetate, nitro cellulose, trimethylsilylcellulose; starch and starch derivatives, as for example hydroxyethyl starch; acrylates and methacrylates, as for example polyacrylic acid, polymethylmethacrylate; Novolaks; polyolefines, as for example polyethylene, polypropylene; polystyrene; copolymers such as styrene-acrylonitrile-copolymers as well as silicone polymers.

An apparatus that is suitable for carrying out the invention is also an object of the present invention.

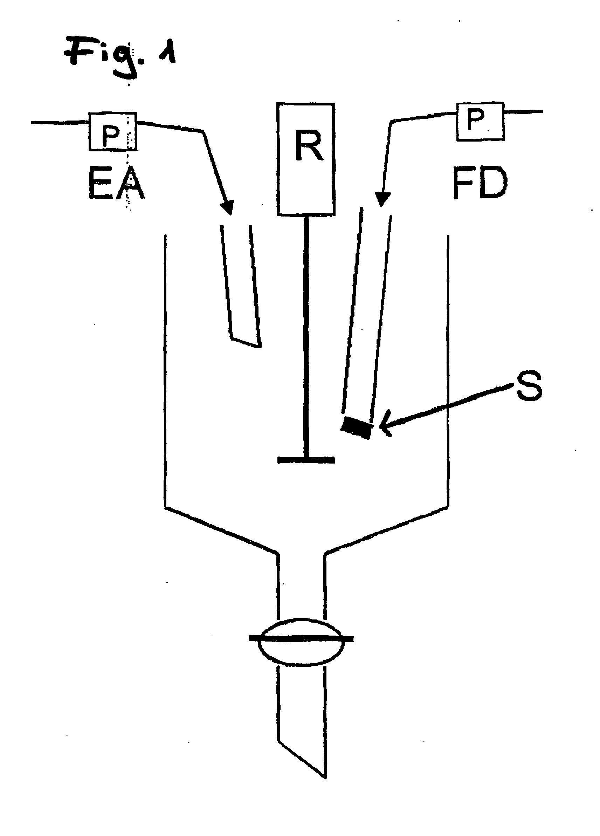

It is characterized by one or more spinning nozzles (S), through which a delivering-phase (feed FD) is introduced into a mixing zone (M) with a mixing device, e.g. a stirrer (R), by means of a conveying means, e.g. a pump (P), wherein a pure receiving-phase (extraction agent EA) is present at the beginning, which can also be introduced by means of a conveying means, e.g. a further pump (P) (Fig. 1). Such an apparatus is particulary preferable for the continuous fractionation of Novolak.

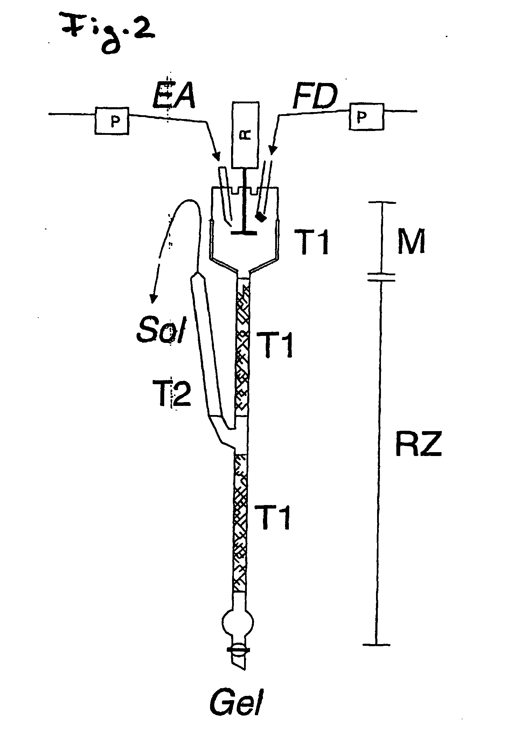

In a further embodiment of the apparatus according to the invention (Fig. 2), the lower end of the mixing zone leads into a zone of rest (RZ), wherein the sol-phase and the gel-phase are separated macroscopically and can be removed continuously. The mixing zone and the zone of rest are preferably maintained at constant temperature. The effect of the fractionation can be increased by setting the temperature (T₂) of the area where the sol is removed to a different value as the remainder of the apparatus (T₁). In those cases where the solubility of the polymers in the solvents that are used decreases with decreasing temperature, T₂ < T₁ is valid; if the solubility decreases with increasing temperature, T₂ > T₁ must be selected. The described measure serves to transfer polymers having a low solubility from the coexisting phase that is low in polymers (sol) into the polymer-rich phase (gel). Instead of a zone of rest, both phases can also be separated from each other by means of a flow-through-centrifuge.

The spinning nozzles that are used consist of a chemically resistant material, preferably noble metal/alloy (gold/platinum or tantalum) and exhibit orifices having a diameter in the range of from 20 to 150 µm. Particularly suitable are those having_orifices of from 70 to 100 µm. The optimum number of orifices per area depends on the specific conditions. Values between 150 and 1500 orifices per square centimeter have shown to be particularly practicable.

### Examples

Comparison of spinning process and CPF

Due to the restriction of CPF to delivering-phases having a relatively low viscosity, a comparison of the processes is restricted to moderate polymer concentrations in the feed. The examples relate to celluose acetate (CA) and hydroxyethyl starch (HES).

### Example 1: Fractionation of cellulose acetate (CA)

In both cases, the presence of two phases is achieved by adding 2-propanol (2-POH) to solutions of CA in methyl acetate (MeAc). The viscosity of the gel thus formed is so high that the material exchange in the CPF is possible only during a short phase after the addition of the feed to EA. The advantages of the chromatographic process of CPF are not realized because the transport of materials via the phase boundary is too slow and because it is also not possible to achieve an improvement by means of vigorous stirring. The number of theoretical plates (equivalent number of equilibria), which is normally around 3 to 4, is thereby reduced to less than one.

In the example according to the invention, the spinning nozzle consists of a gold-platinum-alloy and has an orifice size of 70 µm and 1200 orifices per cm². The gel thus formed sediments due to its higher density and is removed continuously from the lower parts, while the sol flows off freely from the upper part of the zone of rest (Fig. 2).

The conditions of operation for the CPF as well as for the spinning-fractionation can be derived from the following Table 1a.

**Table 1a: Operating conditions for CPF and spinning-fractionation.**

| Feed W_{MeAC}/ W_{2-POH}/W_{CA} | EA W_{MeAc}/ W_{2-POH} | pumping rate FD/ml min⁻¹ | pumping rate EA/ml min⁻¹ | T₁/°C | T₂/°C |
|---|---|---|---|---|---|
| 0.55/0.39 /0.06 | 0.51/0.4 9 | 0.6 | 0.6 | 25 | 20 |

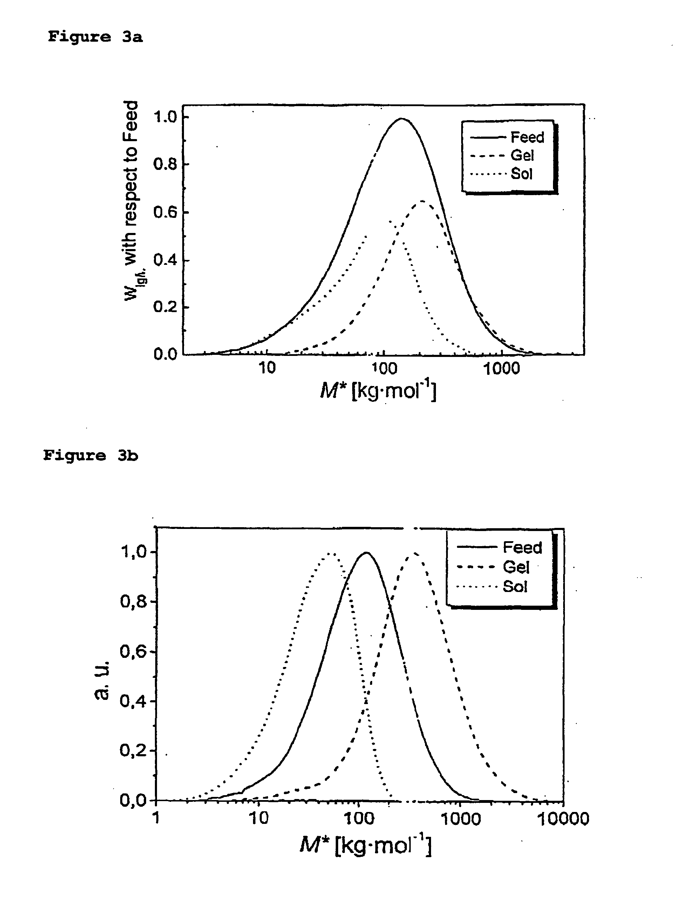

Figures 3a and 3b show the results of the fractionation of cellulose acetate. Information on the heterogeneity of the fractions can be found in Table 2. It can be seen that the cut through the molecular weight distribution of the starting polymers is significantly sharper in the case of the spinning fractionation as compared to the CPF. The heterogeneities of the fractions are significantly reduced by means of the spinning procedure.

Figure 3a shows the GPC-results (polystyrene-calibration) for the fractionation of CA with the aid of CPF. W_{lgM*} is the normalized weight fraction of the polymer having a molecular weight M^{*}.

Figure 3b shows the molecular weight distribution from GPC (polystyrene-calibration) for the fractionation of CA with the aid of spinning fractionation. The scale of the ordinate is chosen arbitrarily (a.u.), such that the maximum of the distribution curve adopts the value 1.

**Table 1b: Comparison of the fractionation processes**

| | Mₙ* [kg/mol] | M_{w}* [kg/mol] | U |
|---|---|---|---|
| Feed | 60 | 148 | 1.5 |
| CPF - Sol | 45 | 97 | 1.2 |
| CPF - Gel | 140 | 270 | 0.9 |
| Spinning Fract. - Sol | 25 | 49 | 0.9 |
| Spinning Fract. - Gel | 87 | 159 | 0.8 |

| | | | |
|---|---|---|---|
| Heterogeneity U = M_{w} / Mₙ -1 | | | |

### Example 2: Fractionation of hydroxyethyl starch (HES)

The advantage of realizing two zones of different temperatures is demonstrated by means of this example.

**Table 2a: Conditions of operation for CPF and spinning fractionation**

| Feed W_{water}/ W_{acetone}/W_{HES} | EA W_{water} W_{acetone} | pumping rate FD/ml min⁻¹ | pumping rate EA/ml min⁻¹ | T₁/°C | T₂/°C |
|---|---|---|---|---|---|
| 0.47/0.23/0.30 | 0.48/0.52 | 2 | 10 | 20 | 30 |

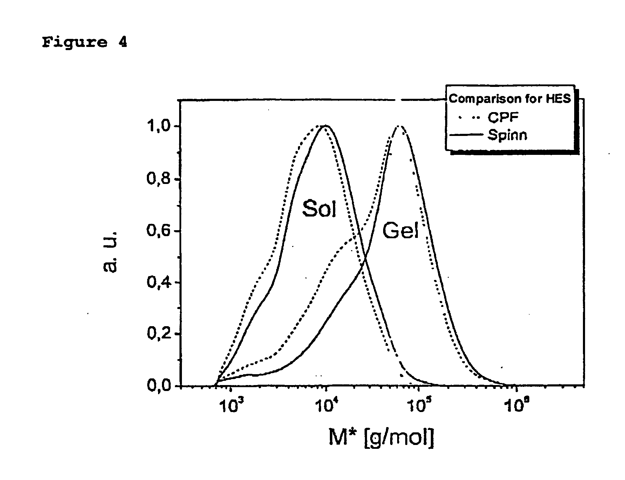

Figure 4 shows the GPC-results (dextran-calibration) for the fractionation of HES. The curves are normalized in their height. The gel fraction is clearly more uniform in the case of the spinning process as compared to the CPF. The following table provides a quantitative comparison of both processes.

**Table 2b: Comparison of the CPF fractions with the spinning fractions (obtained under similar conditions of operation), GPC-results (dextran-calibration)**

| | Mₙ [kg/mol] | M_{w} [kg/mol] | U |
|---|---|---|---|
| CPF - Sol | 4.8 | 10.6 | 1.2 |
| CPF - Gel | 14.0 | 58.0 | 3.1 |
| Spinning Fract. - Sol | 5.7 | 13.2 | 1.3 |
| Spinning Fract. - Gel | 20.0 | 73.0 | 2.6 |

### Example 3: Fractionation of hyperbranched polymers

This example proves that it is also possible to separate macromolecules with a non-linear structure successfully according to the molecular weight with the aid of the spinning fractionation on a preparative scale. For these purposes, a hyperbranched polymethylmethacrylate (PMMA) is fractionated with the discontinuous spinning process and characterized by means of GPC (light scattering and viscosity detector). The combination of the solvent acetone and the precipitation agent methanol at 30°C proved to be particularly suitable.

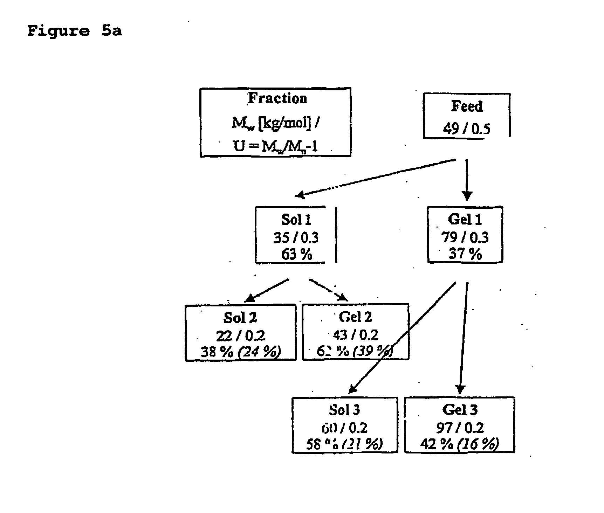

Figure 5a shows the fractionation scheme for hyperbranched PMMA, M_{w} and U from GPC (viscosity-LS-coupling), percentages refer to the yields (per fractionation step, total fractionation, respectively.

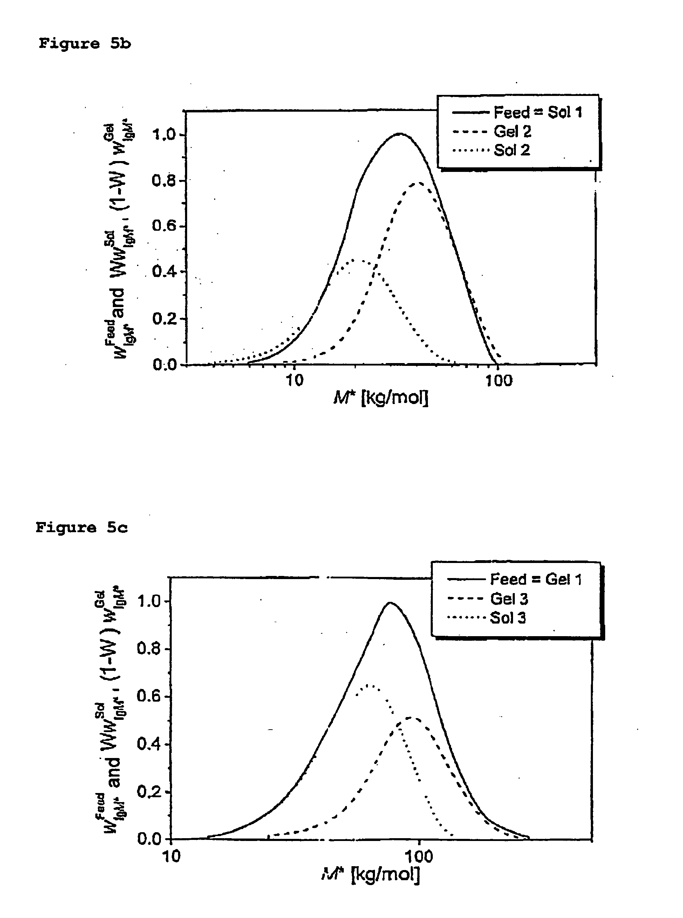

Figures 5b and 5c show the molecular weight distribution of feed, sol and gel of the two final fractionation steps. Figure 5b shows the fractionation of sol 1 and Figure 5c shows the fractionation of gel 1.

### Example 4: Discontinuous fractionation of Novolak

The Novolak used for the fractionation was prepared by reacting m- and p-cresol as well as xyleneols with formaldehyde under acidic conditions. The viscosity of the Novolak is 17.9 mm²/s (measured as a solution of 26.0 % of Novolak in propyleneglycol methyletheracetate at 25.0°C, Ubbelohde-capillaries). It is of course possible to use Novolaks of this type with other viscosities - the usual range is from 13 mm²/s to 40 mm²/s - or also Novolaks that are prepared from other monomer mixtures, for the fractionation.

Two systems have proved to be particulary suitable as mixed solvents in the discontinuous experiment (Table 4a and 4b): Propyleneglycol methyletheracetate(PGMA) with heptane and PGMA and cyclohexane (CH), respectively. For both systems experiments were carried out at different temperatures in the lower- as well as in the upper-critical polymer concentration range.

**Table 4a: Mixed solvent: PGMA/heptane, process conditions; T=25°C**

| | ^{W}SPN | ^{W}PGMA | Wheptane | mass [g] |
|---|---|---|---|---|
| feed | 0.428 | 0.572 | -- | 13.19 |
| extraction agent | -- | 0.400 | 0.600 | 15.04 |
| operating point | 0.200 | 0.481 | 0.319 | |

**Table 4b: Mixed solvent: PGMA/CH, operating conditions; T=50°C**

| | W_{SPN} | W_{PGMA} | W_{CH} | mass [g] |
|---|---|---|---|---|
| feed | 0.431 | 0.569 | -- | 14.95 |
| extraction agent | -- | -- | 1.000 | 15.04 |
| operating point | 0.231 | 0.305 | 0.464 | |

**Table 4c: Operating conditions; T=25°C (continuous fractionation)**

| | W_{SPN} | W_{PGMA} | Wₕₑₚₜₐₙₑ | flow rate [ml/min] |
|---|---|---|---|---|
| feed | 0.428 | 0.572 | -- | 2 |
| extraction agent | -- | 0.200 | 0.800 | 19.1 |
| operating point | 0.059 | 0.251 | 0.690 | |

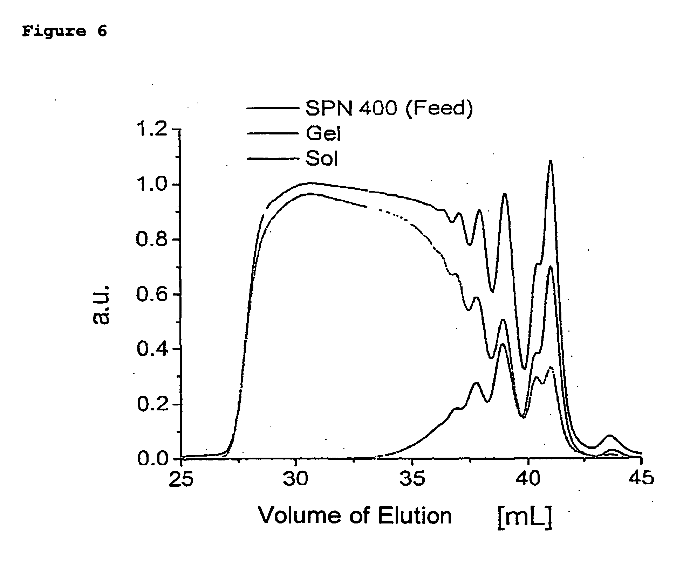

Figure 6 shows the GPC-results; elution diagram of feed, sol and gel.

### Example 5: Fractionation of polyacrylic acid (PAA)

Polacrylic acid may be fractionated with this process directly as well as in neutralized form. In neutralized form, the solvents water, esters and ketones are suitable whereas diethyl ether, 2-propanol as well as inorganic salts (e.g. MgCl₂, KCl, NH₄Cl and (NH₄)₂SO₄) are precipitation agents. A supercritical fractionation succeeds by using the spinning apparatus, wherein the concentration of PAA at the operating point is clearly above the critical concentration. For PAA with a M_{w} of 6 kg/mol, the critical PAA-concentration for the system H₂O/MgCl₂/PAA is 26 wt%, at the operating point it is 40 wt% and therefore clearly higher.

In the case of a fractionation of not neutralized PAA, alcohols and water are suitable as solvents; esters, ketones and dioxane represent precipitation agents.

Two phases are also formed by adding a second so-called auxiliary polymer (e.g. dextran, pullulane or polyethylene oxide) to an aqueous PAA-solution. The molecular weight of the auxiliary polymer should be suitably significantly higher than that of PAA, e.g. dextran with 500 kg/mol. Due to the different solubility, the two polymers may be separated from each other after a successful fractionation.

### Example 6: Fractionation of polyethylene (PE)

In the fractionation of polyethylene with the aid of a pulsed CPF, a pronounced damming back occurs in the column already in the case of moderate polymer concentrations in the delivering-phase. In addition, a slight decrease of the temperature below the operating conditions, which are between 127 and 133°C, leads to a crystallisation of the PE. The use of the spinning apparatus excludes the formation of damming back and permits a better control of the operating conditions, so that the deposit of solid PE can be prevented.

A temperature of 135°C is used for the system tetraline (T)/triethylglycol (TEG)/PE. The FD has the following composition (parts by weight): 0.80 T/0.09 TEG/0.11 PE; the EA is composed of 0.82 T and 0.18 TEG. During the spinning fractionation a supercritical PE-concentration of 7 wt/% is realized at the operating point. Due to the experimental set up according to the invention, it is possible to maintain the working temperature constant at every part of the apparatus, so that there is no deposit of solid PE.

### Example 7: Fractionation of copolymers

A copolymer (e.g. statistical copolymer of styrene and acrylonitril (SAN)) is fractionated with the aid of a suitable homopolymer (e.g. polystyrene (PS)) as a precipitation agent in a common solvent (e.g. dimethylacetamide (DMAc)) according to the chemical composition.

In the case of SAN, a solution of SAN in DMAc was introduced into a solution of high molecular PS by means of a spinning nozzle. Due to the incompatibility of the two polymers two phases are formed. The PS and the part of the SAN with the higher content of styrene are enriched in the phase with the higher density. The PS can be separated from the SAN due to its lower solubility in different precipitation agents (such as methanol). In this process, SAN with a mean fraction of acrylonitrile of 26 % (using a polystyrene sample of M_{w}=600 kg/mol) is separated into two fractions, wherein one fraction exhibits a content of acrylonitrile of 31 % and the other of 5 %. The molecular weight (M_{w}) of both SAN fractions does not change during this fractionation.

## Claims

1. Process for the fractionation of polymers, **characterized in that** the polymer solution (delivering-phase) is pressed through a spinning nozzle or through several spinning nozzles into a mixing zone, which contains an intensively agitated precipitation liquid (receiving phase), wherein a two-phase mixture of a sol-phase and a gel-phase is formed and the sol-phase and the gel-phase are separated from each other.

2. Process according to claim 1, **characterized in that** the sol-phase and the gel-phase are separated from each other in a zone of rest following the mixing zone.

3. Process according to claim 2, **characterized in that** the sol-phase and the gel-phase are continuously removed from the zone of rest.

4. Process according to claim 2 or 3, **characterized in that** the area of removing sol and the area of removing gel within the zone of rest are set to different temperatures.

5. Process according to one or more of the claims 1 to 4, **characterized in that** the precipitation liquid is a solvent or a solvent mixture which preferably takes up the components of the polymer to be fractionated that are better soluble.

6. Process according to one or more of the claims 1 to 5, **characterized in that** the delivering-phase is a concentrated, homogeneous solution of the polymer to be fractionated.

7. Process according to one or more of the claims 1 to 6, **characterized in that** the polymer solution is pressed through the spinning nozzle(s) by means of a pump.

8. Process according to one or more of the claims 1 to 7, **characterized in that** the receiving phase contains a homopolymer as an auxiliary polymer.

9. Process according to one or more of the claims 1 to 8, **characterized in that** the fractionation takes place according to the molecular weight, the molecular geometry and/or according to the chemical composition.

10. Process according to one or more of the claims 1 to 9, **characterized in that** cellulose, cellulose derivatives, starch, starch derivatives, arcylates, methacrylates, Novolaks, polyolefines, polystyrene, copolymers as well as silicone polymers are fractionated.

11. Apparatus for carrying out the process according to one or more of the claims 1 to 10, **characterized by** one or more spinning nozzles (S), through which a delivering-phase (FD) can be pressed by means of a conveying means (P), and a mixing zone (M) with a mixing means (R) for receiving a receiving-phase (EA) and the delivering-phase pressed through the spinning nozzle(s).

12. Apparatus according to claim 11, **characterized in that** a zone of rest (RZ) for the separation of phases and one or two bleeder connections for the removal of the lighter and/or heavier phase are provided at the lower end of the mixing phase.

13. Apparatus according to claim 12, comprising one or two thermostats for the setting of different temperatures (T₁ and T₂) within the zone of rest.

## Patentansprüche

1. Verfahren zur Fraktionierung von Polymeren, **dadurch gekennzeichnet, daß** die Polymerlösung (abgebende Phase) durch eine Spinndüse oder durch mehrere Spinndüsen in eine Mischungszone gepreßt wird, die eine intensiv durchmischte Ausfällungsflüssigkeit (aufnehmende Phase) enthält, wobei eine Zweiphasenmischung einer Sol-Phase und einer Gel-Phase gebildet wird und die Sol-Phase und die Gel-Phase voneinander getrennt werden.

2. Verfahren gemäß Anspruch 1, **dadurch gekennzeichnet, daß** die Sol-Phase und die Gel-Phase voneinander in einer auf die Mischungszone folgenden Ruhezone getrennt werden.

3. Verfahren gemäß Anspruch 2, **dadurch gekennzeichnet, daß** die Sol-Phase und die Gel-Phase kontinuierlich aus der Ruhezone entfernt werden.

4. Verfahren gemäß Anspruch 2 oder 3, **dadurch gekennzeichnet, daß** der Bereich der Entnahme von Sol und der Bereich der Entnahme von Gel innerhalb der Ruhezone auf unterschiedliche Temperaturen eingestellt sind.

5. Verfahren gemäß einem oder mehreren der Ansprüche 1 bis 4, **dadurch gekennzeichnet, daß** die Ausfällungsflüssigkeit ein Lösungsmittel oder eine Lösungsmittelmischung ist, die vorzugsweise die Komponenten des zu fraktionierenden Polymers aufnimmt, die besser löslich sind.

6. Verfahren gemäß einem oder mehreren der Ansprüche 1 bis 5, **dadurch gekennzeichnet, daß** die abgebende Phase eine konzentrierte homogene Lösung des zu fraktionierenden Polymers ist.

7. Verfahren gemäß einem oder mehreren der Ansprüche 1 bis 6, **dadurch gekennzeichnet, daß** die Polymerlösung mit einer Pumpe durch die Spinndüse(n) gepreßt wird.

8. Verfahren gemäß einem der mehreren der Ansprüche 1 bis 7, **dadurch gekennzeichnet, daß** die aufnehmende Phase ein Homopolymer als ein Hilfspolymer enthält.

9. Verfahren gemäß einem oder mehreren der Ansprüche 1 bis 8, **dadurch gekennzeichnet, daß** die Fraktionierung nach dem Molekulargewicht, der Molekulargeometrie und/oder der chemischen Zusammensetzung erfolgt.

10. Verfahren gemäß einem oder mehreren der Ansprüche 1 bis 9, **dadurch gekennzeichnet, daß** Cellulose, Cellulosederivate, Stärke, Stärkederivate, Acrylate, Methacrylate, Novolake, Polyolefine, Polystyrole, Copolymere sowie Siliconpolymere fraktioniert werden.

11. Vorrichtung zum Durchführen des Verfahrens gemäß einem oder mehreren der Ansprüche 1 bis 10, das **gekennzeichnet ist durch** eine oder mehrere Spinndüsen (S), **durch** die eine abgebende Phase (FD) mittels einer Fördereinrichtung (P) gepreßt werden kann, und eine Mischungszone (M) mit einer Mischvorrichtung (R) zum Aufnehmen der aufnehmenden Phase (EA) und der **durch** die Spinndüse (n) gepreßten abgebenden Phase.

12. Vorrichtung gemäß Anspruch 11, **dadurch gekennzeichnet, daß** eine Ruhezone (RZ) für die Phasentrennung und eine oder zwei Ablaßverbindungen zum Entfernen der leichteren und/oder schwereren Phase am unteren Ende der Mischungsphase vorgesehen sind.

13. Vorrichtung gemäß Anspruch 12, umfassend ein oder zwei Thermostate zum Einstellen unterschiedlicher Temperaturen (T₁ und T₂) innerhalb der Ruhezone.

## Revendications

1. Procédé de fractionnement de polymères, **caractérisé en ce que** la solution de polymère (phase de libération) est pressée à travers une buse de filage ou à travers plusieurs buses de filage dans une zone de mélange, qui contient un liquide de précipitation agité de manière intensive (phase de réception), dans lequel un mélange en deux phases d'une phase sol et d'une phase gel est formé et la phase sol et la phase gel sont séparées l'une de l'autre.

2. Procédé selon la revendication 1, **caractérisé en ce que** la phase sol et la phase gel sont séparées l'une de l'autre dans une zone de repos suite à la zone de mélange.

3. Procédé selon la revendication 2, **caractérisé en ce que** la phase sol et la phase gel sont retirées de manière continue de la zone de repos.

4. Procédé selon la revendication 2 ou 3, **caractérisé en ce que** la zone de retrait de la phase sol et la zone de retrait de la phase gel à l'intérieur de la zone de repos sont réglées à des températures différentes.

5. Procédé selon l'une ou plusieurs des revendications 1 à 4, **caractérisé en ce que** le liquide de précipitation est un solvant ou un mélange de solvants qui de préférence prélève les composants du polymère à fractionner qui sont le mieux solubles.

6. Procédé selon l'une ou plusieurs des revendications 1 à 5, **caractérisé en ce que** la phase de libération est une solution homogène concentrée du polymère à fractionner.

7. Procédé selon l'une ou plusieurs des revendications 1 à 6, **caractérisé en ce que** la solution polymère est pressée à travers la(les) buse(s) de filage au moyen d'une pompe.

8. Procédé selon l'une ou plusieurs des revendications 1 à 7, **caractérisé en ce que** la phase de réception contient un homopolymère comme polymère auxiliaire.

9. Procédé selon l'une ou plusieurs des revendications 1 à 8, **caractérisé en ce que** le fractionnement a lieu en fonction du poids moléculaire, de la géométrie moléculaire et/ou de la composition chimique.

10. Procédé selon l'une ou plusieurs des revendications 1 à 9, **caractérisé en ce que** de la cellulose, des dérivés de cellulose, de l'amidon, des dérivés d'amidon, des arcylates, des méthacrylates, des novolaques, des polyoléfines, du polystyrène, des copolymères ainsi que des polymères de silicone sont fractionnés.

11. Appareil de conduite du procédé selon l'une ou plusieurs des revendications 1 à 10, **caractérisé par** une ou plusieurs buse(s) de filage (S), à travers laquelle(lesquelles) une phase de libération (FD) peut être pressée à l'aide d'un moyen de convoyage (P), et une zone de mélange (M) avec un moyen de mélange (R) pour recevoir une phase de réception (EA) et la phase de libération pressée à travers la(les) buse(s) de filage.

12. Appareil selon la revendication 11, **caractérisé en ce qu'**une zone de repos (RZ) pour la séparation des phases et une ou deux connexion(s) de soutirage pour le retrait de la phase la plus légère et/ou la plus lourde sont fournies à l'extrémité inférieure de la phase de mélange.

13. Appareil selon la revendication 12, comprenant un ou deux thermostat(s) pour le réglage des différentes températures (T₁ et T₂) à l'intérieur de la zone de repos.
